# EUROPEAN PATENT SPECIFICATION

(11) **EP 1 216 089 B1**
(45) Date of publication and mention of the grant of the patent: **21.06.2006**
(21) Application number: 00965020.1
(22) Date of filing: 14.09.2000
(51) Int. Cl.: B01D 67/00

(54) **PATTERNED POROUS STRUCTURES**
GEMUSTERTE PORÖSE STRUKTUREN
STRUCTURES POREUSES A MOTIFS

(30) Priority: 17.09.1999 US 154630 P; 17.11.1999 US 166152 P
(43) Date of publication of application: 26.06.2002
(73) Proprietor: MILLIPORE CORPORATION, Billerica, Massachusetts 01821 (US)
(72) Inventor: MOYA, Wilson, Concord, MA 01742 (US)
(74) Representative: Henkel, Feiler & Hänzel
(86) International application number: PCT/US2000/025248
(87) International publication number: WO 2001/019505

(56) References cited:
- EP-A- 0 272 043
- EP-A- 0 795 600
- WO-A-96/32635
- FR-A- 2 233 626
- FR-A- 2 633 398
- US-A- 5 370 836

## Description

The present invention is related to porous structures having selected functional patterns upon and/or in them.

This application relates to co-pending US Patent Applications "Three Dimensional Patterned Porous Structures,"USSN 60/154,564 filed September 17,1999; "High Throughput Templateing Card," USSN 60/ 154,565, filed September 17,1999; and "Patterned Porous Structures", USSN 60/154,630, filed September 17,1999.

### BACKGROUND OF THE INVENTION

Patterned porous structures have been known. In particular, patterned porous membranes have been used to create membranes having hydrophilic areas separated from each other by a grid like pattern of hydrophobic areas. These membranes have been useful in diagnostic applications and in the collection, culturing, enumeration and identification of microorganisms. These porous regions can serve the functions of filtration, separation by absorption or adsorption, or as small individual reaction vessels, or other functions requiring small, high surface area volumes. The regions can be chemically modified by methods known in the art such as by methods disclosed in US patent 5,629,084, which is incorporated herein by reference.

U.S. Patent 5, 271, 839 teaches a process for forming patterns in porous structures. It uses an otherwise non-porous polymeric material which has the desired pattern masked off. It then contacts that material with a solvent that gels the exposed surfaces. The gelled material is then precipitated by exposure to a non-solvent for the polymeric material thereby forming porous structures within the polymeric material in the form of the pattern while the masked areas remain non-porous. The final product is recovered following removal of the mask.

U.S. Patent 5, 627, 042 teaches a surface modification method in which the surface of a hydrophobic membrane is coated with a crosslinked hydrophilic polymer in the shape of a pattern. The entire membrane is first contacted with an appropriate monomer or monomers for hydrophilic coating. Subsequently the hydrophilic pattern is formed by UV initiated polymerization and crosslinking of the monomers in selected areas of the membrane by exposing portions of the membrane to the light while masking the other portions from exposure to the light. This process results in a membrane having patterned-hydrophilic portions in the areas exposed to the UV light and hydrophobic portions in the area masked from the U V light.

Both of these processes have limitations. For example, the method of the '839 patent is limited to certain combinations of solvents, polymers, and non-solvents which will give the desired porosity. Additionally, some well-known polymeric materials such as PTFE resin are difficult or impossible to solvate and therefore not suitable for the process. Even where a solvent is available, many of these solvents are extremely flammable or toxic making their use difficult and or prohibitive. Precise control of the porous regions is difficult, particularly for very small regions required for microchemistry applications, because of lateral diffusion of the solvent in the polymer material during polymer-solvent contact.

Likewise, the process of the '042 patent is limited in its ability to form such structures due to the required UV absorbing characteristics of the selected polymers and/or monomers or the relative ability of the structures to retain the hydrophilic or hydrophobic characteristics. In addition this process does not produce a pattern of porous regions separated by reduced porosity or non-porous regions, but of porous hydrophilic regions separated by porous hydrophobic regions or ways. The porous hydrophobic ways can cause cross contamination between the porous hydrophilic regions if the liquid has some wetting potential and is contacted for sufficient time.

WO 96/3265A discloses a method of defining in a porous substrate by means of a compressing process a region where the porous substrate is compressed. The compressed region should substantially prevent the transport of material through or cross the region. The amount of pressure applied to the substrate is chosen so that the porous structure of a substrate is collapsed to achieve substantial non-porosity, but not too high so as to significantly destroy the mechanical integrity of the substrate.

The present invention aims at providing a method for forming a porous structure containing one or more selected patterns which is applicable to all porous structures regardless of the their polymer content, the method of manufacture or their UV-absorbing characteristics.

The present invention provides a process for forming a pattern of porous and non-porous areas on a porous structure comprising the steps defined in claim 1. The invention also provides a patterned porous structure as defined in claim 5. Preferred embodiments of the process and of the device are defined in the dependent claims.

The present invention is a porous structure formed with areas of porous material and areas of non-porous material. Preferably, the structure is formed in the arrangement of a desired pattern of porous and non-porous areas. The pattern structure is formed through the collapse of selected portions of the porous structure in the shape of the desired pattern to render these portions with reduced porosity or non-porous while the remaining portions of the structure remain porous. The use of pressure with heat and/or softening is preferred to collapse the selected areas. The collapse may be aided by the use of a softening solvent or solvent/non-solvent mixture. The process can be applied to any polymeric porous structure of any pore size such as ultrafiltration or microfiltration, made by any process such as by track etch, stretching, casting, sintering or extrusion. It may be a single layer or multiple layered system formed either simultaneously or sequentially. In addition, it may be used with woven or nonwoven fabrics.

These and other objects will be readily discernable from the teachings of the specification and claims below.

### BRIEF DESCRIPTION OF THE DRAWINGS

Figure 1 shows a first embodiment of the present invention in perspective view.
Figure 2 shows a second embodiment of the present invention in perspective view.
Figure 3 shows another embodiment of the present invention in cross sectional view.
Figure 4 shows a further embodiment of the present invention in cross sectional view.
Figure 5 shows an embodiment of the present invention in planar, top down view.
Figure 6 shows an embodiment of the present invention in cross sectional view.
Figure 7 shows an embodiment of the present invention in cross sectional view.
Figure 8 shows an embodiment of the present invention in perspective view.
Figure 8A shows an alternative, multilayered embodiment to Figure 8 in cross sectional view.
Figure 9 shows an embodiment of making the present invention in cross sectional view.
Figure 10 shows another embodiment of making the present invention in cross sectional view.

### DETAILED DESCRIPTION OF THE INVENTION

The basic premise of the present invention is to take a porous structure and selectively collapse portions of that structure in the shape of a desired pattern so as to render those areas with reduced porosity or non-porous while the remaining portions of structure remain porous.

It is well known that porous structures, such as membranes are susceptible to collapse due to their inherent high surface area and porosity that results in an internal structure which is inherently weak due to the small amount of supporting structure holding the membrane together. Membrane collapse occurs when a membrane is subjected to a mechanical force and/or thermal energy thereby causing the supporting structure of the membrane, which typically amounts to about between 10% and 50% of the volume of the membrane (the rest being air), to collapse and become irreversibly fused into a dense reduced porosity or non-porous mass.

Generally, membrane collapse is highly undesirable because it reduces the effective porous structure area available for its intended use such as filtration. However, it has now been found that the controlled collapse of selected areas of porous structure can be beneficial in certain applications such as in the filtration and/or immobilization of biomolecules in the biotechnology industry or in microfluidics applications such as in laboratory-on-a-chip or biochip technologies. This is particularly true when the collapsed areas are formed in a desired pattern.

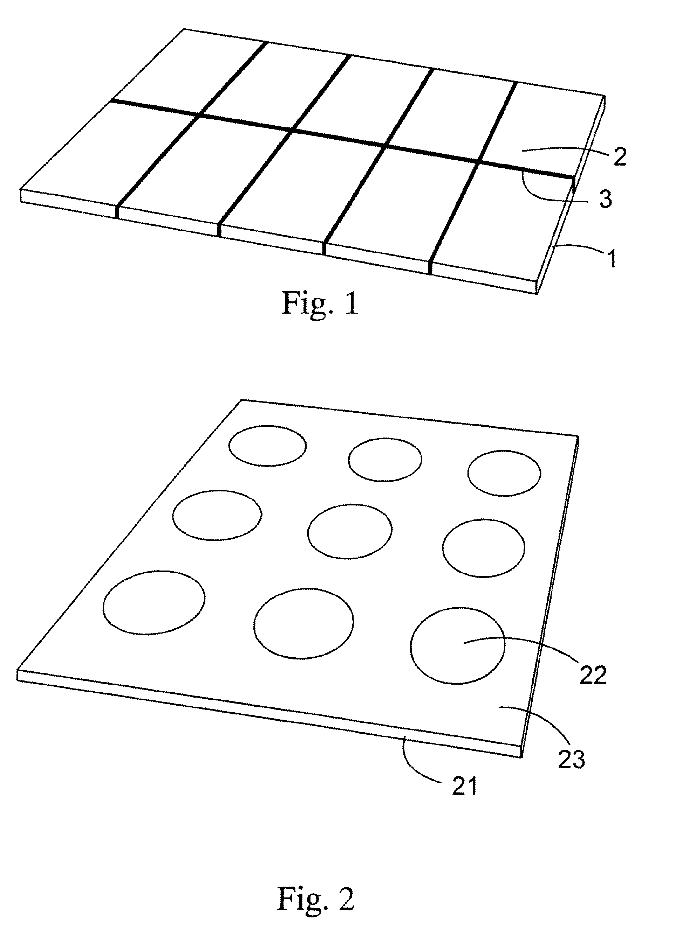

In Figure 1 is shown a first embodiment of the present invention. As shown, there is a structure, in this case a porous structure 1 that has one or more areas of porous materials 2 and one or more reduced porosity or non-porous areas 3. In this arrangement, the reduced porosity or non-porous areas 3 are formed as a series intersecting lines that form a series of square grids, the interior of each square being formed of porous material 2. While the affected areas are described as as being of reduced porosity or being non-porous, it is preferred that they be essentially non-porous, e.g. that liquids do not easily or normally flow through these areas as compared to the flow obtained in the porous areas. Such gridded porous structures are useful in many applications such as in the analysis of microbes in fluids such as water, beverages, pharmaceuticals and other liquids. Likewise, the gridded pattern can serve as "reinforcing structures" to improve the strength or handling characteristics of an otherwise weak unsupported membrane such as an unsupported ultrafiltration membrane or a cellulosic membrane :

An alternative design is shown in Figure 2, where the one or more porous areas 22 of the porous structure 21 are circular in design and set out in even rows and columns. The area between the porous areas is a non-porous material 23 formed by the process of the present invention. Such a design is useful in plasmid preparation and other small volume separations.

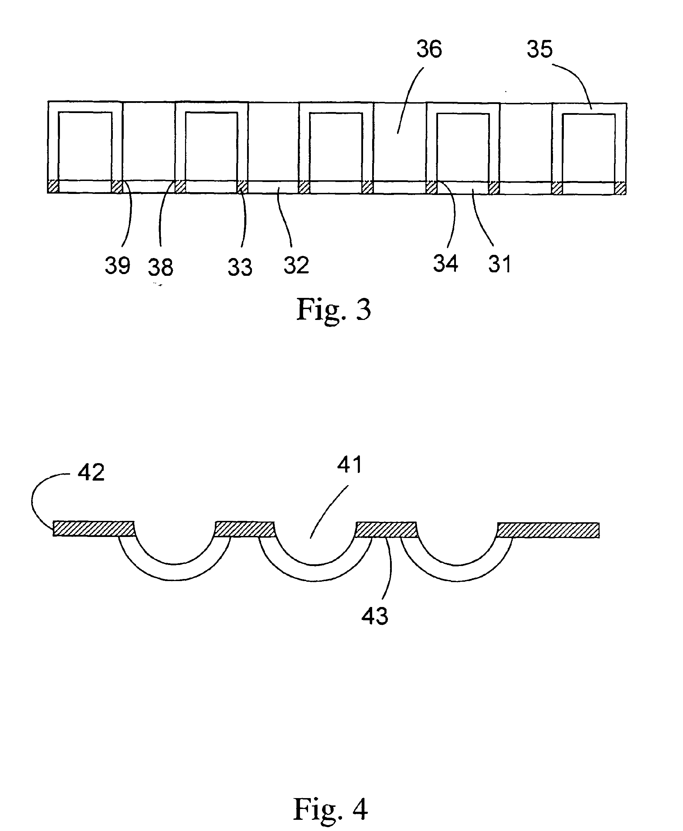

Additionally, this product can then be used in conjunction with a multiple welled device, such as a 96, 384 or higher density well plate, as is shown in Figure 3. In this Figure, the porous structure 31 of the design of Figure 2 has been attached to the bottom 34 of a multiple well plate 35 such that one of the porous areas 32 register with one and only one opening 36 of the plate. The non-porous portion 33 is attached to the land portion 38 of the plate so that a liquid tight seal is formed around the outer periphery 39 of each opening 36 between the plate 35 and the non-porous portions 33 of the porous structure 31. In this way, a series of separate liquid-tight, sealed, porous wells can be formed in a multiple well device. Additionally, this product allows for the simple attachment of the porous material to the bottom of the open well device. This is something that has in the past been difficult if not impossible to do, especially with UF membranes. The reason being that UF membranes are very delicate and tend to easily collapse even in areas where pressure, heat or softening materials have not been applied. It has been found however that the product of the present invention does not suffer from that problem. As such, one can simply heat bond, weld, solvent attach, glue or mechanically attach the patterned porous structure to the well plate without fear of injury to the porous patterns.

In addition, it has been found that the formation of the porous patterns can be carried out such that small 3-dimensional multiple "wells" (concave/convex surfaces) are formed in the porous areas during the collapsing process as shown in Figure 4. Here the porous areas 41 of the structure 42 are formed into convex/concave forms and are separated from each other by an essentially flat non-porous areas 43. This device can be formed by the use of openings of a depth and the use of pressure heat, or softening agent sufficient to cause the porous area to slightly flow into the opening so as to form the convex/concave surface. Such a structure can be used as a mini-multiple well device to "hold" drops of liquids in place in the dimpled porous regions. This pattern may be used by itself as shown or in conjunction with a support layer (not shown), such as one or more additional layers of porous structures, a porous plastic sheet or film having openings of size and pattern to coincide to the pattern of porous areas in the structure or it may simply be placed upon a porous or reduced porosity or non-porous support layer with no pattern. In this way, one may obtain a micro-well plate or device that is particularly useful in multiple assays and other small volume template devices and tests.

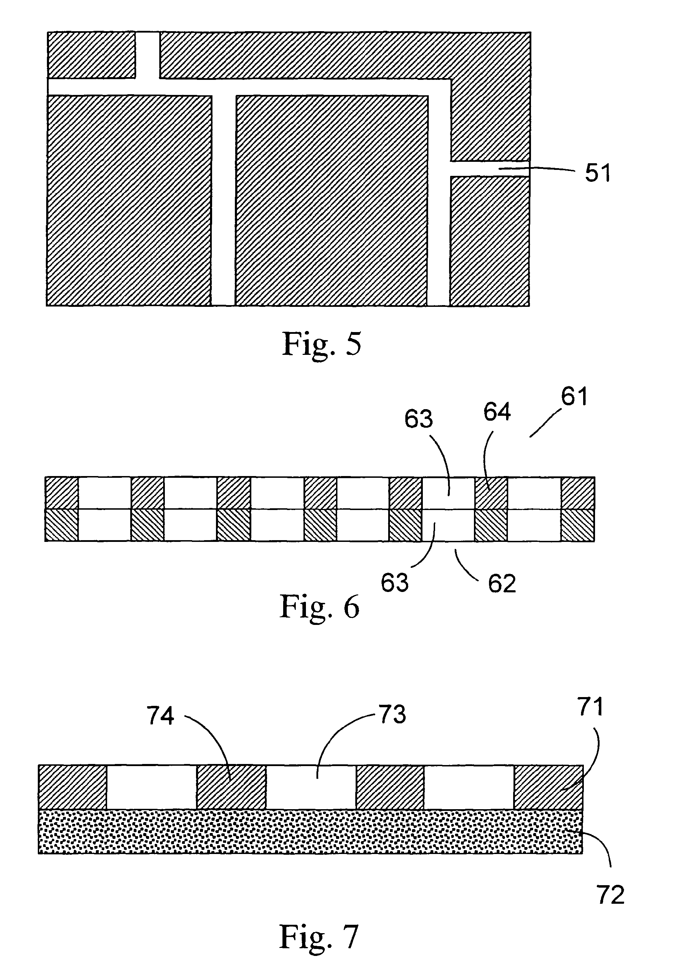

Another form of the present invention can be in a form resembling that of a computer chip. As shown in Figure 5, the porous porous structure portions 51 can be used as fluid pathways that can be used as a lab-on-a-chip where the pathways are analog to semiconductor integrated circuits. If desired, several layers with different but complementary patterns may be formed together, along with throughholes or vias between the layers to form a multilayered lab-on-a-chip design. Alternatively, such a device can be used in diagnostic devices where the same body fluid such as blood or saliva is then conducted to various regions of and/or at different rates of travel through the structure for different tests. This is helpful in the rapid identification and treatment of diseases and the determination of other conditions such as diabetes or pregnancy or can be used as laboratory on a chip conducting several experiments on one sample and/or its various filtrates.

In Figure 6 is shown an embodiment in which two or more layers of porous structure and/or porous support material are formed together into a porous non-porous area arrangement. As shown in the Figure, there is a porous structure layer 61 and a porous support layer 62. The two are fused together via the heat/pressure/softening agent process of the present invention so as to form a uniform structure having areas of porosity 63 and non-porosity 64 formed through both layers 61 and 62 and these areas 63 and 64 being in registration with each other. The second layer does not have to serve only as a support but can have other functional benefits to the composite structure such as when an absorbent material is used, it can aid in the removal of an excess liquid from the exposed surface of the porous areas by drawing said liquid through the porous porous structure areas without the need for an external device such as a vacuum pump or a centrifuge to draw the liquid through the porous porous structure areas. Likewise, the additional layers may be as described above, porous structure layers in and of themselves. In this way one can customize the filtration through the structure in a variety of ways. For example, one can select porous structures of different porosities in sequence to obtain a gradient of pore size and thereby filtration. One could also use charged (negative or positive) and uncharged layers as desired or select different layers with known absorptive qualities (such as cellulosic porous structures) or low protein binding to create a unique structure capable of enhanced filtration performance.

Alternatively, one may simply place or bond a structure of the present invention to an adjacent layer(s). The adjacent layer(s) again can be porous structures themselves, more openly porous structures such as nonwoven supports or netting or reduced porosity or non-porous materials. This is shown in Figure 7 where a porous/reduced porosity or non-porous layer 71 formed as shown in Figure 2 is laid on top of a porous structure 72, in this case a nonwoven support layer. The porous 73 and non-porous 74 areas are only in the first layer 71 and do not extend into the other layer 72. The first layer 71 may be simply laid on top of the second layer 72 or it may be held adjacent to it via mechanical means such as by clamps or a frame or it may laminated or adhered to the second layer 72 by heat, pressure, solvents, adhesives welding such as ultrasonic welding, and any other such means which are well-known to one of ordinary skill in the art. As discussed above, the second layer can simply provide a support function or it may play an active part in the structure such as providing a means for drawing liquid through the porous structure areas.

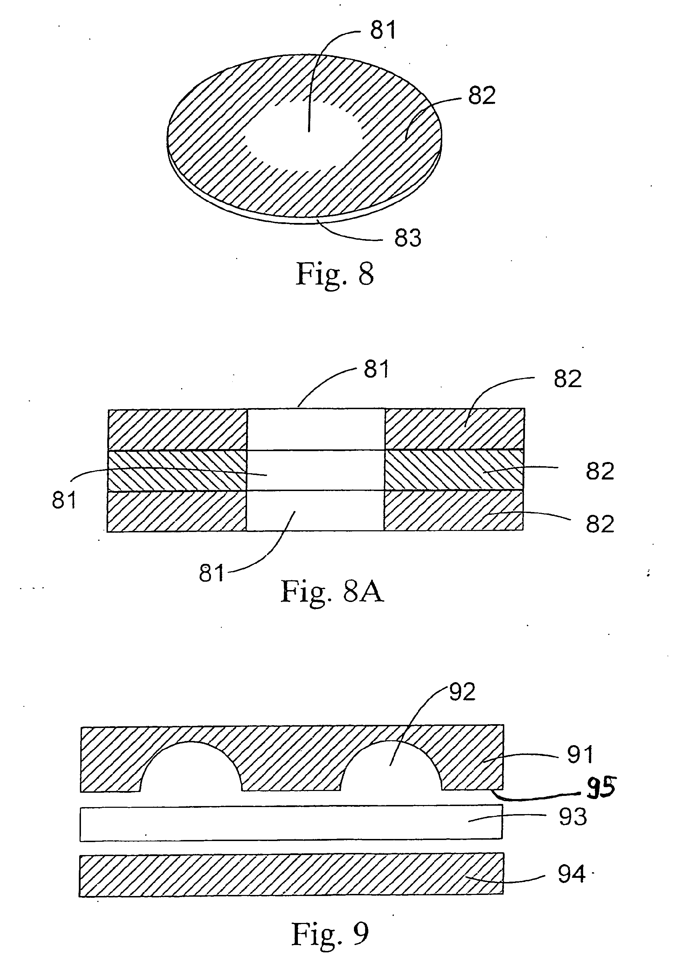

Figure 8 shows another embodiment of the present invention. In this embodiment, there is only one area of porous material 81 and one area of non-porous material 82 in the porous structure 83. As shown in the Figure, the porous area 81 is surrounded by the non-porous area 82. Other arrangements may be used as well such as more than one area of porous material surrounded by one continuous area of non-porous material or vice versa.

Additionally, as shown in Figure 8A, multiple layers of porous materials and/or support materials such as netting or nonwoven support material may be used to create a multilayered structure of the design of Figure 8. The structure can simply be formed simultaneously by stacking the desired layers together and forming the porous non-porous structure. Alternatively, as discussed above the layers can be made individually and then formed together in to a unified structure. The layers may be the same or different materials, the choice being up to the designer and the parameters within which he/she is working. They may also be formed of the same or different diameters of active area. For example, it may be desired to form a structure having a narrowing or increasing diameter as one travels through the structure from one side to the other.

Additionally, although the embodiments of Figures 8 and 8A are shown as being circular, they are not limited to that shape. Any shape which accomplishes the desired effect can be used, including triangular, rectangular, octogonal and other polygonal as well as regular and irregular shapes.

The particular design shown in Figures 8 and 8A is of value in allowing one to use a structure of one given size, yet the area of active porosity may be widely varied. For example, there are several standard sized membranes used in various standardized tests, typically circular membranes having a diameter of 25 mm, 37 mm or 47 mm. A supplier must have on inventory a supply of each size membrane in each type of membrane material that is used along with a supply of the various sized holders for these membranes during the tests. Using a membrane of the design shown in Figures 8 and 8A, one can simply maintain a stock of the largest membrane size (typically 47 mm diameter) and use the process of present invention to reduce the active porous area to the smaller required size as needed by the customer. This reduces the amount of inventory of different sized membranes and holders that is required to be maintained.

The porous non-porous structure of the present invention may also be used in injection molded devices. The non-porous areas can be arranged in a configuration that coincides with the areas in contact with the injection molding material. This isolates the porous material from the injection molding material and the heat associated with the application of that material allowing for one to make an injection molded device with an integral porous structure as one component of that device.

Other uses and the incorporation of a porous non-porous structure of the present invention will be obvious to one of ordinary skill in the art.

The method of forming the structure of the present invention is to use a combination of both heat, pressure to selectively collapse porous areas of a porous structure so as to form the porous/reduced porosity or non-porous structure of the present invention. The selection of heat, and pressure is determined by the porous structure material and the desires of the designer. It is preferred with polymeric materials to use a combination of heat and pressure in forming the device. However in porous materials which are highly temperature sensitive, use of pressure alone may be more appropriate.

A softening chemical may be used to assist in the collapse, such as a properly chosen solvent, or mixture of solvent and non-solvent or partial solvent for the polymeric porous structure, which will hasten the collapse of the porous region when pressure is applied. In some cases, for example, thin sheets, mere application of the softening chemical during collapse may be sufficient to collapse the porous regions to form the patterns without the need for using heat. When using a softening chemical, the porous structure can be contacted with the softening chemical prior to being collapsed. The nature of the softening chemical will vary depending on the porous structure polymer but it can be water, alcohols such as t-butyl alcohol, glycerol, halogenated solvents such as chloroform, polar aprotic solvents such as N-methyl pyrrolidone, dimethylformamide, aromatic solvents such as toluene or mixtures thereof.

In a typical method for making the present invention, one determines which process one will use and then forms a template in the desired shape and pattern for the desired product. For example, one may decide to form a porous non-porous structure having a series of circular porous areas arranged in rows and columns (similar to that of Figure 2). A setup for making the product of present invention is shown in Figure 9. One simply makes a template 91 with a series of openings 92 that correspond in size and arrangement to the desired series of porous areas for the structure. Gridded structures may be formed by forming a template-like template, a screen or using a simple straight edge device and applying it sequentially to the various areas of the structure 93 in order to form the desired gridded arrangement. The device of Figure 8 can be formed by forming an opening in the template 91 which has a diameter corresponding to that of the desired size (e.g. 25 mm or 37mm, etc.). Other arrangements can easily be made by one of ordinary skill in the art.

The template 91 is then placed against the porous structure 93 and a choice of pressure plus, heat, and/or softening chemical is applied to the structure 93 for a period of time sufficient to form the desired pattern in the structure 93. Typically, the structure is backed by an adjacent surface 94,that is preferably flat, although it doesn't need to be, against which the template 91 is applied. Alternatively, the adjacent surface 94 may also contain a pattern that can be complimentary to that of the template 91 or not. When using a softening chemical, it can also be applied to the template 91. For example, the solid portion 95 of the template 91 that contact the structure 93 can be coated with said softening chemical prior to collapsing the selected areas of the structure 93.

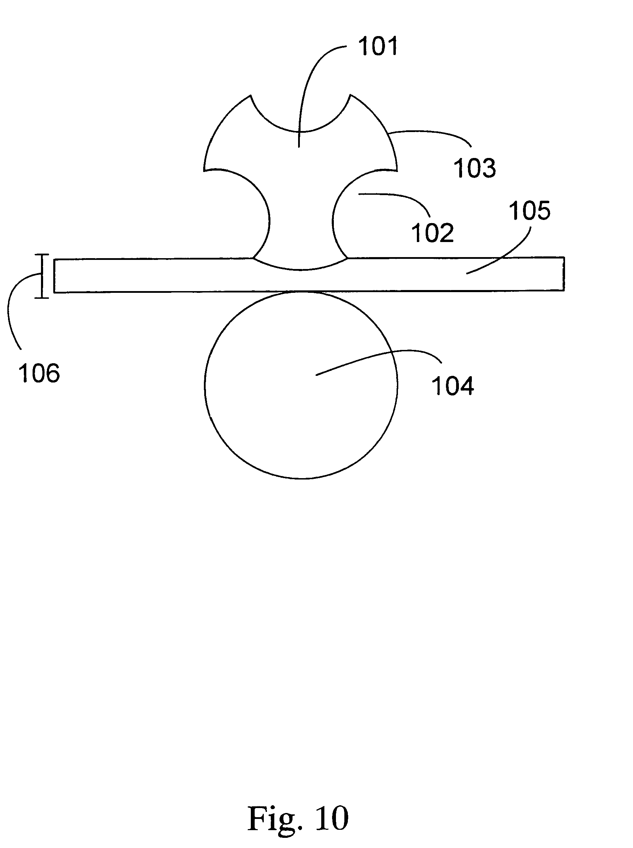

Alternatively, the process may be carried out in a continuous manner using one or more rollers or belts or other similar devices which can apply a select repeated pattern to a length of porous material either on one or both sides as desired. In such an embodiment, one simply uses a roller such as an embossing roller and runs a length of porous material between the roller and a non-embossed surface, such as a flat surface or a non-embossed or smooth roller. Alternatively, the adjacent surface may also contain a patterned surface if desired. The device used for forming the continuous pattern may be formed of metal or rubber, the material of choice depending upon the ability to form adequate patterns in the structure. Pressure plus Heat and/or softening agent may be applied through the device or its adjacent non-embossed surface or both. Figure 10 shows one embodiment of a continuous process. A first roller 101 contains a series of depressions or openings 102 in its outer surface 103 that correspond to the desired porous pattern. An adjacent roller 104 is also used. In this embodiment it is shown as a smooth roller although it may also contain a series of depressions or openings in its outer surface if one so desires. A length of porous structure material 105 is passed between the two rolls 101 and 104 and the pattern is formed in the structure 105. One may vary the gap 106 between the two roller surfaces so as to allow for the suitable formation of the desired pattern. Depending upon the choice of pattern formation, one may vary the gap accordingly. Additionally, where heat is used as one or the sole means for forming the pattern, one may use a heating roller either as one of the two rollers and/or as a roller before entering the pattern-making device so as to preheat the structure to the desired temperature.

When using heat, one should select a temperature which is sufficient to cause the pores in the selected areas to collapse but not to cause the pores is the other areas to collapse. The specific temperature is dependent upon the polymer used. However, the temperature should be from well before the structure begins to deform to the melting point of the structure. Alternatively, one can use a temperature from about 25°C to about 500°C, preferably from about 25°C to about 300°C and more preferably from about 50°C to about 200°C for a time sufficient to cause collapse of the porous structure. The time can vary depending on the temperature used but can be in the range of about 1 second to 60 minutes, preferably between about 1 seconds and about 30-minutes and more preferably between about 2 seconds and about 10 minutes.

When using pressure in combination with heat or a softening chemical, one should use sufficient pressure to cause the collapse of the pores in the selected area without adversely affecting the pores in the other areas. The amount of pressure used can vary depending on the amount of surface area to be collapsed, time, temperature and softening chemical but one can typically use from about 68.95 kPa (10 psi) to about 3447.4 MPa (500,000 psi). Preferably from about 689.5 kPa (100 psi) to about 689.5 kPa (100,000 psi) and most preferably from about (3447.4 kPa)(500psi) to about 344.7 MPa (50,000 psi).

The template can be made of a material normally used in pressure or heating applications. Metals such as stainless steel or aluminum are preferred especially for the heat or heat/pressure applications as they easily conduct heat. Various plastics such PTFE, polyethylene, especially ultrahigh molecular weight polyethylene (UPE), polypropylene or epoxies can be used to make templates as well. Other materials such as fiberglass or carbon composites, various rubbers such as EPDM or butyl rubber, even wood can be used to make templates. All that is required is that the material have sufficient strength and/or heat resistance to withstand the use. The template may also have a non-stick surface such as a PTFE coating in order to ensure easy removal of the formed structure from the template.

The product of the present invention and the process by which it is made can be applied to any porous membrane that is subject to collapse. Preferably, it is of particular use with any polymeric porous membrane of any pore size, such as reverse osmosis, ultrafiltration, microfiltration, macrofiltration, any configuration such as symmetrical or asymmetrical, skinned or unskinned and made by any process such as casting, extrusion, track etching, sintering, stretching and other such well-known methods. Additionally, the process may be used on woven and nonwoven fabric which provide a filtration function.

The polymeric material which forms the preferred porous porous structure that may be used to form the product of the present invention is not limited as occurred with the prior art products and processes for forming patterned membranes. For example, one is not limited to materials that form gelled structures in the presence of a solvent. This means one can use materials that are difficult if not impossible to solvate due to the lack of appropriate solvents for the material, such as PTFE resin. Additionally one may use UV absorbent polymers such as polyethersulphone that was not possible with the known prior art techniques. These polymers can include semicrystalline or amorphous polymers, hydrophilic polymers or hydrophobic polymers. They may be thermoplastic, which are preferred or thermoset.

Preferred polymers include but are not limited to polyolefins such as polyethylene, including ultrahigh molecular weight polyethylene, polypropylene and various polyolefin copolymers and terpolymers, PTFE resin and thermoplastic perfluoropolymers such as PFA, PVDF, polyamides, polyimides, polyethersulphones, polysulphones, polyarylsulphones, PVC, PET, polycarbonates, cellulose, cellulose esters such as cellulose acetate or cellulose nitrate, polystyrenes, polyetherimides, acrylic polymers, methacrylic polymers, copolymers of acrylic or methacrylic polymers, various thermoset materials such as epoxy, epoxy filled materials and polyurethanes, or blends of any of the above and the like.

Support structures which can be used in association with the patterned structure of the present invention can be any of the above polymers as well as glass, cotton or other fibrous products, typically in the form of a scrim, woven fabric or nonwoven, as well as non-porous sheets.

The selected porous structures may be surface modified either before or after the pattern formation so as to provide a specific surface characteristic such as hydrophilicity, hydrophobicity, charge, affinity ligands and the like.

The shape of the porous structure can be any which is useful such as the traditional round or rectangular shaped porous structures, although other shapes can be used.

Likewise, filled porous structures may also be used in this process. Such porous structures are well known in the art and typically contain ion exchange resins or chromatography media embedded in the matrix of the porous structure. One such material is sold by 3M of Minneapolis, Minnesota under the name of Empore® membranes.

### EXAMPLE 1:

A patterned porous/reduced porosity or non-porous ultrahigh molecular weight polyethylene (UPE) membrane was made according to the teachings of the present invention. A 0.1 microns UPE membrane available from Millipore Corporation of Bedford, Massachusetts was placed into a hydraulic press. A flat metal template having circular voids of about 2 mm diameter spaced about 3mm apart (measured from center to center) was placed on top of the membrane and a flat metal plate having a smooth surface was placed under the membrane and the press was closed and operated at about 165.5 MPa (24,000 psi) over a rectangular area 15.24 cm (6 inches) by 30.48 cm (12 inches) and heated to a temperature of about 110°C for 2 minutes.

The membrane was removed from the press and examined. Portions of the membrane were collapsed in the areas where the membrane contacted the metal of the template. A pattern of porous circular portions of membrane corresponding to the voids in the template were clearly shown and remained.

### EXAMPLE 2 :

A hydrophilic surface modified polyvinylidene fluoride membrane, available from Millipore Corporation of Bedford, Massachusetts) of 7.62 cm (3.0 inches) by 11.43 cm (4.5 inches), having a porosity of about 80 percent, with average pore size of 0.45 microns, was formed into a patterned structure according to the present invention.

A template of 7 cm (2.75 inches) by 10.8 cm (4.25 inches) was made of steel and a series of 384 equally spaced circular openings (0.125 inch in diameter) was formed in the template in an arrangement of 16 rows of 24 openings. The template was attached to the a heat source of a Carver laboratory hydraulic press obtained from Fred S. Carver, Inc, of Menomonee, Wisconsin. The template was heated to 180°C and the membrane was placed between the template and a flat metal plate having a smooth surface heated to 160°C. The membrane, sandwiched between the template and the metal plate was placed in the press and the press was activated at 151.7 MPa (22,000 psi) for 10 seconds. The template was then removed and the membrane was cooled.

384 equally spaced circular dots corresponding to the openings of the template were formed in the membrane and found to have remained porous and hydrophilic while the area of membrane surrounding the dots were substantially of reduced porosity or non-porous. Additionally, it was found that the surfaces of the dots were concave on one surface while being convex on the other. This allowed for the formation of 384, discrete, isolated porous wells that are suitable for a variety of analytical and laboratory uses.

### EXAMPLE 3:

A patterned porous/reduced porosity or non-porous polytetrafluoroethylene(PTFE) membrane was made according to the teachings of the present invention. A 0.1 micron PTFE membrane available from Millipore Corporation of Bedford, Massachusetts was placed on topa flat piece of polished stainless steel having a smooth surface. A flat stainless screen having circular voids about 76 microns in diameter spaced about 150 microns apart (measured center to center) was placed on top of the membrane. A second flat piece of polished stainless steel having a smooth surface was placed on top of the screen to form a sandwich. The sandwich was then placed in the jaws of a pair of pliers, closed and pressed by hand for about 30 seconds at room temperature.

The membrane was removed from the sandwich and examined. Portions of the membrane were collapsed and rendered substantially non-porous in the areas where the membrane contacted the metal of the screen. A pattern of porous circular portions corresponding to the voids in the screen were clearly formed and remained.

## Claims

1. A process for forming a pattern of porous and non-porous areas on a porous structure comprising the steps of:
selecting one or more layers of a porous structure (93;105), forming a pattern template (91;101) having a solid matrix (95;103) containing one or more openings (92;102), said one or more openings (92;102) being arranged in the solid matrix (95;103) to form the selected pattern for the porous and non-porous areas,
contacting the template (91;101) to a selected surface of the porous structure (93;105), and
applying pressure in combination with heat and/or softening to the areas of the structure (93;105) aligned with the solid matrix (95;103) in the template (91;101) in order to cause the porous structure (93;105) beneath the solid matrix (95;103) of the template (91;101) to collapse and become irreversibly fused into a non-porous mass.

2. The process of claim 1 wherein the porous structure (93;105) is surface modified before or after the formation of the porous and non-porous areas.

3. The process of claim 2 wherein the surface modification is selected from the group consisting of hydrophilic coatings, hydrophobic coatings, negatively charged coatings and positively charged coatings.

4. The process of claim 1, 2 or 3 wherein said porous structure (93;105) is a porous membrane, a woven fabric or a non-woven fabric.

5. A patterned porous structure comprising one or more layers of a porous structure (1;21;313;42;61;71;83;93) having one or more areas of porous material (2;22;32;41;63;73;81) and one or more areas of porous material irreversibly fused into a non-porous material (3;23;33;43;64;74;82) by application of pressure in combination with heat and/or softening.

6. The patterned structure of claim 5 wherein the one or more areas of porous material (2;22;32;41;63;73) are more than one in number and are arranged in a manner so as to be separate and distinct from each other and separated from each other by a non-porous structure (3;23;33;43;64;74).

7. The patterned structure of claim 5 or 6 wherein the one or more areas of porous material (2;22;32;41;63;73;81) are of a shape selected from the group consisting of circles, ovals, polygons, lines, and mixtures thereof.

8. The patterned structure of any one of claims 5 to 7 wherein the one or more porous areas are 96 in number and are equal in size.

9. The patterned structure of any one of claims 5 to 7 wherein the one or more areas are at least 96 in number, equal in size and arranged in rows relative to each other in both the X and Y direction.

10. The patterned structure of any one of claims 5 to 9 wherein the one or more areas are at least 384 in number.

11. The patterned structure of any one of claims 5 to 10 wherein the porous structure (61;71;83) is formed of two or more layers.

12. The patterned structure of claim 11 wherein each of the layers has one or more areas of porous material (63;81) and one or more areas of non-porous material (64;82) formed therein.

13. The patterned structure of claim 11 wherein less than all of the layers have one or more areas of porous material (73) and one or more areas of non-porous material (74) formed therein and in register with each other.

14. The patterned structure of claim 12 wherein the areas of porous and non-porous material vary from layer to layer.

15. The patterned structure of claim 11 wherein at least one of the one or more layers has one or more areas of porous material (73) and one or more areas of non-porous material (74) formed therein.

16. The patterned structure of claim 15 wherein the two or more layers are selected from the group consisting of porous membranes, porous support materials and blends thereof.

17. The patterned structure of claim 15 wherein at least one layer is a porous membrane and the remaining layer(s) is/are selected from the group consisting of porous membranes, porous support materials, reduced porosity or non-porous materials and blends thereof.

18. The patterned structure of claim 11 wherein each of the layers has formed therein one area of porous material (81) surrounded by one area of non-porous material (82) along an outer periphery of the porous material.

19. The patterned structure of claim 18 wherein the porous material (2;22;32;41;63;73;81) being in a shape selected from the group consisting of circles, ovals, triangles, rectangles, squares and polygons.

20. The patterned structure of claim 5 wherein the porous structure is formed of two or more layers of porous membranes and each of the layers having formed therein one area of porous material (81) surrounded by one area of non-porous material (82) along an outer periphery of the porous material (81).

21. The patterned structure of claim 5 wherein the porous structure is formed of two or more layers of porous structures, each of the layers having formed therein one area of porous material surrounded by one area of non-porous material along an outer periphery of the porous material and the porous structures are formed of a material selected from the group consisting of polyolefins, polyolefin copolymers and terpolymers, PTFE resin, thermoplastic perfluoropolymers, polyamides, polyimides, PVDF, polyethersulphones, polysulphones, polyarylsulphones, PVC, PET, polycarbonates, cellulose, cellulose esters, cellulose acetate, cellulose nitrate, polystyrenes, polyetherimides, acrylic polymers, methacrylic polymers, copolymers of acrylic or methacrylic polymers, epoxies, epoxy filled materials, polyurethanes and blends of;any of the above.

22. The patterned structure of any one of claims 5 to 20 wherein the porous structure is formed of a material selected from the group consisting of polyolefins, polyolefin copolymers and terpolymers PVDF, PTFE resin, thermoplastic perfluoropolymers, polyamides, polyimides, polyethersulphones, polysulphones, polyarylsulphones, PVC, PET, polycarbonates, cellulose, cellulose esters, cellulose acetate, cellulose nitrate, polystyrenes, polyetherimides, acrylic polymers, methacrylic polymers, copolymers of acrylic or methacrylic polymers, epoxies, epoxy filled materials, polyurethanes and blends of any of the above.

23. The patterned structure of any one of claims 5 to 20, wherein the porous structure is surface modified before or after the formation of the porous and non-porous areas.

24. The patterned structure of claim 23 wherein the surface modification is selected from the group consisting of hydrophilic coatings, hydrophobic coatings, negatively charged coatings and positively charged coatings.

25. The patterned structure of any one of claims 5 to 24, wherein said porous structure is a porous membrane, a woven fabric or a non-woven fabric.

26. The patterned structure of any one of claims 5 to 25, wherein said one or more areas of porous material (41) are formed into convex/concave forms and are separated from each other by essentially flat areas of said one or more areas of non-porous material (43).

27. The patterned structure of any one of claims 5 to 25, wherein said one or more areas of porous material are formed into pathways (51) with said areas of non-porous material delimiting said pathways (51) analogous to a semiconductor integrated circuit for conducting liquids to selected regions of the structure.

28. A process for manufacturing standard sized membranes with a desired area of active porosity that is smaller than said membranes, comprising:
preparing membranes of said standard size;
applying the process as defined in claim 1, 2 or 3 by using said membranes as said layers of porous structure and forming said area of active porosity by collapsing and irreversibly fusing the remainder of said membranes surrounding said desired area of active porosity into said non-porous mass.

29. A multi-well device comprising:
a multi-well plate (35) with a plurality of openings (36) and land portions (38) provided at the outer periphery of the openings (36); and
a patterned structure (31) as defined in any one of claims 5 to 25 attached to the multi-well plate (35) such that one of said areas of porous material (32) registers with and closes one of said openings (36) and that said area(s) non porous material (33) is/are attached to the land portions (38) to form a liquid tight seal around the opening(s) (36).

## Patentansprüche

1. Verfahren zum Ausbilden eines Musters aus porösen und nicht-porösen Bereichen auf einer porösen Struktur, mit den folgenden Schritten:
Auswählen einer oder mehrerer Schichten einer porösen Struktur (93;105), Ausbilden einer Musterschablone (91;101) mit einer eine oder mehrere Öffnungen (92;102) enthaltenden festen Matrix (95;103), wobei die eine oder mehreren Öffnung(en) (92;102) in der festen Matrix (95;103) so angeordnet sind, dass sie das gewählte Muster für die porösen und nicht porösen Bereiche bildet/bilden,
in Kontakt Bringen der Schablone (91;101) mit einer ausgewählten Oberfläche der porösen Struktur (93;105), und
Aufbringen eines Drucks in Kombination mit Wärme und/oder einer Erweichung auf die Bereiche der Struktur (93;105), die mit der festen Matrix (95;103) in der Schablone (91;101) ausgerichtet sind, um zu bewirken, dass die poröse Struktur (93;105) unter der festen Matrix (95;103) der Schablone (91;101) kollabiert und unumkehrbar zu einer nicht-porösen Masse verschmolzen wird.

2. Verfahren nach Anspruch 1, wobei die poröse Struktur (93;105) an der Oberfläche vor oder nach der Ausbildung der porösen und nicht-porösen Bereiche modifiziert wird.

3. Verfahren nach Anspruch 2, wobei die Oberflächenmodifikation aus der aus hydrophilen Beschichtungen, hydrophoben Beschichtungen, negativ geladenen Beschichtungen und positiv geladenen Beschichtungen bestehenden Gruppe ausgewählt wird.

4. Verfahren nach Anspruch 1, 2 oder 3, wobei die poröse Struktur (93;105) eine poröse Membran, ein Gewebestoff oder ein Vliesstoff (non-woven fabric) ist.

5. Gemusterte poröse Struktur mit einer oder mehreren Schichten einer porösen Struktur (1;21;313;42;61;71;83;93) mit einem oder mehreren Bereichen aus porösem Material (2;22;32;41;63;73;81) sowie einem oder mehreren Bereichen aus porösem Material, das unumkehrbar zu einem nicht-porösen Material (3;23;33;43;64;74;82) durch Druckbeaufschlagung in Kombination mit Wärme und/oder Erfweichen geschmolzen ist.

6. Die gemusterte Struktur nach Anspruch 5, wobei der eine oder die mehreren Bereich(e) porösen Materials (2;22;32;41;63;73) mehr als eins an der Zahl sind und auf eine Art und Weise angeordnet sind, dass sie getrennt und verschieden voneinander sind und voneinander durch eine nicht-poröse Struktur (3;23;33;43;64;74) getrennt sind.

7. Gemusterte Struktur nach Anspruch 5 oder 6, wobei der eine oder die mehreren Bereich(e) porösen Materials (2;22;32;41;63;73;81) eine aus der aus Kreisen, Ovalen, Polygonen, Linien und Mischformen hiervon bestehenden Gruppe ausgewählte Form aufweist/aufweisen.

8. Gemusterte Struktur nach einem der Ansprüche 5 bis 7, wobei der eine oder die mehreren porösen Bereiche 96 an der Zahl sind und von gleicher Größe sind.

9. Gemusterte Struktur nach einem der Ansprüche 5 bis 7, wobei der eine oder die mehreren Bereiche mindestens 96 an der Zahl sind, von gleicher Größe sind und in Reihen relativ zueinander sowohl in der X- als auch der Y-Richtung angeordnet sind.

10. Gemusterte Struktur nach einem der Ansprüche 5 bis 9, wobei der eine oder die mehreren Bereich(e) mindestens 384 an der Zahl sind.

11. Gemusterte Struktur nach einem der Ansprüche 5 bis 10, wobei die poröse Struktur (61;71;83) aus zwei oder mehr Schichten gebildet ist.

12. Gemusterte Struktur nach Anspruch 11, wobei jede der Schichten einen oder mehrere Bereich(e) porösen Materials (63;81) aufweist und ein oder mehrere Bereich(e) nicht porösen Materials (64;82) darin ausgebildet ist/sind.

13. Gemusterte Struktur nach Anspruch 11, wobei weniger als alle Schichten einen oder mehrere Bereiche porösen Materials (73) sowie einen oder mehrere Bereich(e) nicht-porösen Materials (74) aufweisen, der/die darin ausgebildet sind und miteinander ausgerichtet sind.

14. Gemusterte Struktur nach Anspruch 12, wobei die Bereiche porösen und nicht-porösen Materials von Schicht zu Schicht variieren.

15. Gemusterte Struktur nach Anspruch 11, wobei mindestens eine der einen oder mehreren Schicht(en) einen oder mehrere Bereich(e) porösen Materials (73) und einen oder mehrere darin ausgebildete(n) Bereich(e) nicht-porösen Materials (74) aufweist.

16. Gemusterte Struktur nach Anspruch 15, wobei die zwei oder mehr Schichten aus der aus porösen Membranen, porösen Halterungsmaterialien und Mischformen hiervon bestehenden Gruppe ausgewählt sind.

17. Gemusterte Struktur nach Anspruch 15, wobei mindestens eine Schicht eine poröse Membran ist und die restliche(n) Schicht(en) aus der aus porösen Membranen, porösen Halterungsmaterialien, Materialien mit reduzierter Porosität oder nicht-porösen Materialien und Mischformen hiervon ausgewählt ist/sind.

18. Gemusterte Struktur nach Anspruch 11, wobei in jeder der Schichten ein Bereich porösen Materials (81) ausgebildet ist, der von einem Bereich nicht-porösen Materials (82) entlang einem Außenumfang des porösen Materials umgeben ist.

19. Gemusterte Struktur nach Anspruch 18, wobei das poröse Material (2;22;32;41;63;73;81) eine Form aufweist, die aus der aus Kreisen, Ovalen, Dreiecken, Rechtecken, Quadraten und Polygonen bestehenden Gruppe ausgewählt ist.

20. Gemusterte Struktur nach Anspruch 5, wobei die poröse Struktur aus zwei oder mehr Schichten poröser Membranen gebildet ist und in jeder der Schichten ein Bereich aus porösem Material (81) ausgebildet ist, der von einem Bereich nicht porösen Materials (82) entlang einem Außenumfang des porösen Materials (81) umgeben ist.

21. Gemusterte Struktur nach Anspruch 5, wobei die poröse Struktur aus zwei oder mehr Schichten poröser Strukturen ausgebildet ist, wobei in jeder der Schichten ein Bereich porösen Materials ausgebildet ist, der von einem Bereich nicht porösen Materials entlang einem Außenumfang des porösen Materials umgeben ist, und die porösen Strukturen aus einem Material geformt sind, welches aus der aus Polyolefinen, Polyolefincopolymeren und -terpolymeren, PTFE-Harz, thermoplastischen Perfluorpolymeren, Polyamiden, Polyimiden, PVDF, Polyethersulphonen, Polysulfonen, Polyarylsulfonen, PVC, PET, Polycarbonaten, Cellulose, Celluloseestern, Celluloseacetaten, Cellulosenitraten, Polystyrolen, Polyetherimiden, Acrylpolymeren, Methacrylpolymeren, Copolymeren von Acryl- oder Methacryl-Polymeren, Epoxyharzen, mit Epoxyharz gefüllten Materialien, Polyurethanen und Gemischen der vorstehenden Materialien bestehenden Gruppe ausgewählt wird.

22. Gemusterte Struktur nach einem der Ansprüche 5 bis 20, wobei die poröse Struktur aus einem Material gebildet ist, das aus der aus Polyolefinen, Polyolefincopolymeren und -terpolymeren, PVDF, PTFE-Harz, thermoplastischen Perfluorpolymeren, Polyamiden, Polyimiden, Polyäthersulfonen, Polysulfonen, Polyarylsulfonen, PVC, PET, Polycarbonaten, Cellulose, Celluloseestern, Celluloseacetaten, Cellulosenitraten, Polystyrolen, Polyetherimiden, Acrylpolymeren, Methacrylpolymeren, Copolymeren von Acryl-oder Methacrylpolymeren, Epoxyharzen, mit Epoxyharz gefüllten Materialien, Polyurethanen und Gemischen der obigen Materialien bestehenden Gruppe ausgewählt ist.

23. Gemusterte Struktur nach einem der Ansprüche 5 bis 20, wobei die poröse Struktur an der Oberfläche vor oder nach der Ausbildung der porösen und nicht-porösen Bereiche modifiziert ist.

24. Gemusterte Struktur nach Anspruch 23, wobei die Oberflächenmodifikation aus der aus hydrophilen Beschichtungen, hydrophoben Beschichtungen, negativ geladenen Beschichtungen und positiv geladenen Beschichtungen bestehenden Gruppe ausgewählt ist.

25. Gemusterte Struktur nach einem der Ansprüche 5 bis 24, wobei die poröse Struktur eine poröse Membran, ein Gewebestoff oder ein Vliesstoff (non-woven fabric) ist.

26. Gemusterte Struktur nach einem der Ansprüche 5 bis 24, wobei ein oder mehrere Bereich(e) porösen Materials (41) zu konvexen/konkaven Formen ausgebildet ist/sind und voneinander durch im wesentlichen flache Bereiche des/der einen oder mehrere(n) Bereichs/Bereiche nicht-porösen Materials (43) getrennt sind.

27. Gemusterte Struktur nach einem der Ansprüche 5 bis 25, wobei der eine oder die mehreren Bereiche porösen Materials zu zwei Wegbahnen (51) ausgebildet sind, wobei die Bereiche nicht-porösen Materials die Wegbahnen (51) analog zu einer integrierten Halbleiterschaltung begrenzen, zum Leiten von Flüssigkeiten in ausgewählte Bereiche der Struktur.

28. Verfahren zur Herstellung von standardisiert dimensionierten Membranen mit einem gewünschten Bereich aktiver Porosität, der kleiner ist als die Membranen, umfassend:
Vorbereiten von Membranen der Standardgröße,
Anwenden des Verfahrens, wie es in Anspruch 1, 2 oder 3 definiert ist, durch Verwenden der Membranen als die Schichten poröser Struktur und Ausbilden des Bereichs aktiver Porosität durch Kollabieren und unumkehrbares Schmelzen des Restes der Membranen, welche den gewünschten Bereich aktiver Porosität umgeben, zu einer nicht-porösen Masse.

29. Multiwell-Vorrichtung mit:
einer Multiwell -Platte (35) mit mehreren Öffnungen (36) und Stegabschnitten (38), die an dem Außenumfang der Öffnungen (36) vorgesehen sind, und
einer gemusterten Struktur (31), wie sie in einem der Ansprüche 5 bis 25 definiert ist, und die an der Multiwell Platte (35) so angebracht ist, dass einer der Bereiche porösen Materials (32) mit einer der Öffnungen (36) ausgerichtet ist und diese verschließt, und dass der/die Bereich(e) nicht-porösen Materials (33) an den Stegabschnitten (38) angebracht sind, um eine flüssigkeitsdichte Abdichtung um die Öffnung(en) (36) herum zu bilden.

## Revendications

1. Procédé de formation d'un motif de zones poreuses et non poreuses sur une structure poreuse, comprenant les étapes consistant à :
choisir une ou plusieurs couches d'une structure poreuse (93 ; 105), former un gabarit de motif (91 ; 101) ayant une matrice solide (95 ; 103) contenant une ou plusieurs ouvertures (92 ; 102), lesdites une ou plusieurs ouvertures (92 ; 102) étant disposées dans la matrice solide (95 ; 103) pour former le motif choisi pour les zones poreuses et non poreuses,
mettre le gabarit (91 ; 101) en contact avec la surface choisie de la structure poreuse (93 ; 105), et
appliquer une pression en combinaison avec de la chaleur et/ou un assouplissant sur les zones de la structure (93 ; 105) alignées avec la matrice solide (95 ; 103) dans le gabarit (91 ; 101) afin d'amener la structure poreuse (93 ; 105) en dessous de la matrice solide (95 ; 103) du gabarit (91 ; 101) à s'affaisser et à devenir irréversiblement fondue en une masse non poreuse.

2. Procédé selon la revendication 1, dans lequel la structure poreuse (93 ; 105) est modifiée en surface avant ou après la formation des zones poreuses et non poreuses.

3. Procédé selon la revendication 2, dans lequel la modification en surface est choisie dans le groupe constitué par les revêtements hydrophiles, les revêtements hydrophobes, les revêtements chargés négativement et les revêtements chargés positivement.

4. Procédé selon la revendication 1, 2 ou 3, dans lequel ladite structure poreuse (93 ; 105) est une membrane poreuse, un tissu tissé ou un tissu non tissé.

5. Structure poreuse à motifs comprenant une ou plusieurs couches d'une structure poreuse (1 ; 21 ; 313 ; 42 ; 61 ; 71 ; 83 ; 93) ayant une ou plusieurs zones de matériau poreux (2 ; 22 ; 32 ; 41 ; 63 ; 73 ; 81) et une ou plusieurs zones de matériau poreux irréversiblement fondues en un matériau non poreux (3 ; 23 ; 33 ; 43 ; 64 ; 74 ; 82) par application de pression en combinaison avec de la chaleur et/ou un assouplissant.

6. Structure à motifs selon la revendication 5, dans laquelle une ou plusieurs zones de matériau poreux (2 ; 22 ; 32 ; 41 ; 63 ; 73) sont en nombre supérieur à un et sont disposées de manière à être séparées et distinctes les unes des autres et séparées les unes des autres par une structure non poreuse (3 ; 23 ; 33 ; 43 ; 64 ; 74).

7. Structure à motifs selon la revendication 5 ou 6, dans laquelle les une ou plusieurs zones de matériau poreux (2 ; 22 ; 32 ; 41 ; 63 ; 73 ; 81) sont d'une forme choisie dans le groupe constitué par des cercles, des ovales, des polygones, des lignes et leurs mélanges.

8. Structure à motifs selon l'une quelconque des revendications 5 à 7, dans laquelle les une ou plusieurs zones poreuses sont au nombre de 96 et sont de dimensions égales.

9. Structure à motifs selon l'une quelconque des revendications 5 à 7, dans laquelle les une ou plusieurs zones sont au nombre d'au moins 96, de dimensions égales et disposées en rangées les unes par rapport aux autres dans les directions X et Y.

10. Structure à motifs selon l'une quelconque des revendications 5 à 9, dans laquelle les une ou plusieurs zones sont au nombre d'au moins 384.

11. Structure à motifs selon l'une quelconque des revendications 5 à 10, dans laquelle la structure poreuse (61 ; 71 ; 83) est formée de deux couches ou plus.

12. Structure à motifs selon la revendication 11, dans laquelle chacune des couches possède une ou plusieurs zones de matériau poreux (63 ; 81) et une ou plusieurs zones de matériau non poreux (64 ; 82) formées dans celles-ci.

13. Structure à motifs selon la revendication 11, dans laquelle moins de toutes les couches possèdent une ou plusieurs zones de matériau poreux (73) et une ou plusieurs zones de matériau non poreux (74) formées dans celles-ci et correspondant l'une avec l'autre.

14. Structure à motifs selon la revendication 12, dans laquelle les zones de matériau poreux et non poreux varient d'une couche à l'autre.

15. Structure à motifs selon la revendication 11, dans laquelle au moins une des une ou plusieurs couches possède une ou plusieurs zones de matériau poreux (73) et une ou plusieurs zones de matériau non poreux (74) formées dans celles-ci.

16. Structure à motifs selon la revendication 15, dans laquelle les deux couches ou plus sont choisies dans le groupe constitué par des membranes poreuses, des matériaux de support poreux et leurs mélanges.

17. Structure à motifs selon la revendication 15, dans laquelle au moins une couche est une membrane poreuse et la (les) couche(s) restante(s) est/sont choisies dans le groupe constitué par des membranes poreuses, des matériaux de support poreux, des matériaux à porosité réduite ou non poreux et leurs mélanges.

18. Structure à motifs selon la revendication 11, dans laquelle chacune des couches a, formée dans celle-ci, une zone de matériau poreux (81) entourée par une zone de matériau non poreux (82) le long d'une périphérie extérieure du matériau poreux.

19. Structure à motifs selon la revendication 18, dans laquelle le matériau poreux (2 ; 22 ; 32 ; 41 ; 63 ; 73 ; 81) a une forme choisie dans le groupe constitué par des cercles, des ovales, des triangles, des rectangles, des carrés et des polygones.

20. Structure à motifs selon la revendication 5, dans laquelle la structure poreuse est formée de deux couches ou plus de membranes poreuses et chacune des couches a, formée dans celle-ci, une zone de matériau poreux (81) entourée par une zone de matériau non poreux (82) le long d'une périphérie extérieure du matériau poreux (81).

21. Structure à motifs selon la revendication 5, dans laquelle la structure poreuse est formée de deux couches ou plus de structures poreuses, chacune des couches ayant, formée dans celle-ci, une zone de matériau poreux entourée par une zone de matériau non poreux le long d'une périphérie extérieure du matériau poreux et les structures poreuses sont constituées d'un matériau choisi dans le groupe constitué par les polyoléfines, les copolymères et terpolymères de polyoléfines, la résine de PTFE, les perfluoropolymères thermoplastiques, les polyamides, les polyimides, le PVDF, les polyéthersulfones, les polysulfones, les polyarylsulfones, le PVC, le PET, les polycarbonates, la cellulose, les esters de cellulose, l'acétate de cellulose, le nitrate de cellulose, les polystyrènes, les polyétherimides, les polymères acryliques, les polymères méthacryliques, les copolymères de polymères acryliques ou méthacryliques, les époxy, les matériaux chargés d'époxy, les polyuréthanes et les mélanges de ceux-ci.

22. Structure à motifs selon l'une quelconque des revendications 5 à 20, dans laquelle la structure poreuse est formée d'un matériau choisi dans le groupe constitué par les polyoléfines, les copolymères et terpolymères de polyoléfines, le PVDF, la résine de PTFE, les perfluoropolymères thermoplastiques, les polyamides, les polyimides, les polyéthersulfones, les polysulfones, les polyarylsulfones, le PVC, le PET, les polycarbonates, la cellulose, les esters de cellulose, l'acétate de cellulose, le nitrate de cellulose, les polystyrènes, les polyétherimides, les polymères acryliques, les polymères méthacryliques, les copolymères de polymères acryliques ou méthacryliques, les époxy, les matériaux chargés d'époxy, les polyuréthanes et les mélanges de ceux-ci.

23. Structure à motifs selon l'une quelconque des revendications 5 à 20, dans laquelle la structure poreuse est modifiée en surface avant ou après la formation des zones poreuses et non poreuses.

24. Structure à motifs selon la revendication 23, dans laquelle la modification de surface est choisie dans le groupe constitué par les revêtements hydrophiles, les revêtements hydrophobes, les revêtements chargés négativement et les revêtements chargés positivement.

25. Structure à motifs selon l'une quelconque des revendications 5 à 24, dans laquelle ladite structure poreuse est une membrane poreuse, un tissu tissé ou un tissu non tissé.

26. Structure à motifs selon l'une quelconque des revendications 5 à 25, dans laquelle lesdites une ou plusieurs zones de matériau poreux (41) sont formées en formes convexes/concaves et sont séparées les unes des autres par des zones essentiellement planes desdites une ou plusieurs zones de matériau non poreux (43).

27. Structure à motifs selon l'une quelconque des revendications 5 à 25, dans laquelle lesdites une ou plusieurs zones de matériau poreux sont formées en pistes (51) et lesdites zones de matériau non poreux délimitent lesdites pistes (51) de façon analogue à un circuit intégré de semi-conducteurs, afin de conduire des liquides à des régions sélectionnées de la structure.

28. Procédé de fabrication de membranes de dimensions standard, comportant une zone souhaitée de porosité active qui est plus petite que lesdites membranes, comprenant :
la préparation des membranes de ladite dimension standard ;
l'application du procédé défini par la revendication 1, 2 ou 3 en utilisant lesdites membranes en tant que lesdites couches de structure poreuse et en formant ladite zone de porosité active en affaissant et en fondant irréversiblement le reste desdites membranes entourant ladite zone souhaitée de porosité active en ladite masse non poreuse.

29. Un dispositif à puits multiples, comprenant :
une plaque à puits multiples (35) comportant une pluralité d'ouvertures (36) et des parties pleines (38) prévues sur la périphérie extérieure des ouvertures (36); et
une structure à motifs (31), telle que définie dans l'une quelconque des revendications 5 à 25, attachée à la plaque à puits multiples (35), de façon à ce que l'une desdites zones de matériau poreux (32) corresponde à l'une desdites ouvertures (36) et la ferme, et que la (les) zone(s) de matériau non poreux (33) soit/soient attachées aux parties pleines (38) pour former un joint étanche aux liquides autour de l'(des) ouverture(s) (36).
